# EUROPEAN PATENT APPLICATION

(11) **EP 2 117 273 A2**
(43) Date of publication of application: **11.11.2009**
(21) Application number: 09159549.6
(22) Date of filing: 06.05.2009
(51) Int. Cl.: H04W 48/16

(54) **Cell acquisition method and mobile terminal thereof for communication system**

(30) Priority: 09.05.2008 KR 20080043197
(71) Applicant: Samsung Electronics Co., Ltd., Suwon-si, Gyeonggi-do (KR)
(72) Inventor: Ha, Yong Min, Suwon-si, Gyeonggi-do (KR)
(74) Representative: Ketelaars, Maarten F.J.M.

(57) **Abstract**

A cell acquisition method and mobile terminal is provided for reducing cell acquisition time and power consumption in a communication system. A cell acquisition method of the present invention classifies frequencies into at least one frequency group each having a power level range defined by multilevel threshold values and acquires a cell by performing a cell acquisition process to the at least one frequency group in stepwise manner. The cell acquisition method and mobile terminal of the present invention enables the mobile terminal to stop the cell acquisition process, when a cell is acquired in one of multiple frequency groups, to the rest frequency groups and camps on the acquired cell, thereby reducing the cell acquisition time and power consumption.

## Description

### BACKGROUND OF THE INVENTION

### Field of the Invention

The present invention relates to a communication system and, in particular, to a cell acquisition method and mobile terminal that is capable of reducing cell acquisition time and power consumption in a communication system.

### Description of the Related Art

Typically, when a mobile terminal powers on, it searches for a cell to communicate with. This is called a cell selection procedure.

The cell selection procedure is performed, whenever the mobile terminal discovers a new network, for determining which cell is the most appropriate to camp on. The network can be a Public Land Mobile Network (PLMN).

In more detail, when the mobile terminal is powered on, it searches all radio frequency channels and creates a channel list based on the searched channels corresponding to respective cells. Next, the mobile terminal performs a cell acquisition process to the respective cells and then camps on one of the cells. Through the cell acquisition process, the mobile terminal obtains information on the network which is supposed to provide communication services.

At this time, the mobile terminal creates a cell list listing the cells sorted in received signal level and performs the cell acquisition process with individual cells in descending order of signal level. In more detail, the mobile terminal compares the received signal levels (RXLEV) of the serving cell and neighbor cells with a threshold value and registers the cells of which the received signal level is greater than the threshold value with the cell list. After completing the cell acquisition process to all the cells registered with the cell list, the mobile terminal attempts to camp on the most suitable cell.

Meanwhile, the process is carried out again when radio path is lost or traffic overload occurs, or in response to the network or the mobile terminal' request. This is called cell reselection procedure. Through the cell reselection procedure, the mobile terminal camps on to the most suitable cell again.

The cell reselection can be triggered for several reasons as described above. At this time, the mobile terminal scans all the frequencies of a band allocated to the network it belongs to and performs the cell acquisition process to every frequency searched in the band.

In case of using this conventional cell acquisition method, since the mobile terminal has to carry out the cell acquisition process to all individual cells registered with the cell list to select the most suitable cell to camp on, the cell acquisition time becomes too long. Also, the long cell acquisition time increases power consumption of the mobile terminal.

### SUMMARY OF THE INVENTION

In order to solve the above problems of the prior arts, the present invention provides a cell acquisition method and apparatus for a communication system that is capable of facilitating the cell selection and reselection processes.

Also, the present invention provides a cell acquisition method and apparatus for a communication system that is capable of reducing cell selection delay by grouping the cells listed in the cell list into multiple cell groups using a multilevel thresholding algorithm.

Also, the present invention provides a cell acquisition method and apparatus for a communication system that is capable of reducing cell selection delay and power consumption by grouping the cells listed in the cell list with a multilevel thresholding algorithm and acquiring the cells in descending order of minimum-intensity electric field of cell groups.

Also, the present invention provides a cell acquisition method and apparatus for a communication system that enables a mobile terminal to quickly camp on a cell by grouping the cells listed in the cell list with multiple signal level threshold values and stopping, when a cell is selected from a cell group, the cell acquisition process to the rest cell groups.

Also, the present invention provides a cell acquisition method and apparatus for a communication system that is capable of solving the trade-off problem between cell acquisition success probability and cell acquisition time by performing the cell acquisition in stepwise manner using a multilevel threshold algorithm.

Also, the present invention provides a cell acquisition method and apparatus for a communication system that is capable of reducing cell acquisition time by performing cell acquisition in stepwise manner with the cell groups grouped with multiple received signal threshold values, and increasing the cell acquisition probability by expanding the range of the cell acquisition to the cell group defined with the lowest received signal threshold value.

In accordance with an exemplary embodiment of the present invention, a cell acquisition method for a communication system includes classifying frequencies into at least one frequency group each having a power level range defined by multilevel threshold values; and acquiring a cell by performing a cell acquisition process to the at least one frequency group in stepwise manner.

In accordance with another exemplary embodiment of the present invention, a mobile terminal includes a radio frequency unit which receives signals transmitted cells detected at current location; a storage unit which stores multilevel threshold values defining power level ranges; and a control unit which measures signal levels of the cells, sorts the cells into at least one cell group having the respective power level ranges, and acquires a cell by performing a cell acquisition process to the at least one cell group in stepwise manner.

### BRIEF DESCRIPTION OF THE DRAWINGS

The above and other objects, features and advantages of the present invention will be more apparent from the following detailed description in conjunction with the accompanying drawings, in which:
FIG. 1 is a flowchart illustrating a conventional frequency search and cell acquisition method;
FIG. 2 is a flowchart illustrating a cell acquisition method according to an exemplary embodiment of the present invention;
FIG. 3 is a flowchart illustrating the stepwise cell acquisition process of FIG. 1 in more detail; and
FIG. 4 is a block diagram illustrating a configuration of a mobile terminal according to an exemplary embodiment.

### DETAILED DESCRIPTION OF EXEMPLARY EMBODIMENTS

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

In the following descriptions, a mobile terminal performs a frequency search and cell acquisition procedure to camp on a specific cell of a communication system. Particularly in an exemplary embodiment of the present invention, the cell acquisition method and apparatus increases the cell acquisition possibility by allowing the mobile terminal to camp on a cell with relatively low-intensity electric fields, while minimizing the cell acquisition time and power consumption.

In an exemplary embodiment, multiple threshold signal strength values for searching frequencies in stepwise manner. The multiple threshold values define signal strength windows determining cell groups. These threshold values are called multilevel threshold values.

That is, the frequency search is performed in stepwise manner with the multilevel threshold values such that the searched frequencies are grouped by the multilevel threshold values.

The mobile terminal creates a list of frequencies by received signal power level and classifies the frequencies into plural frequency groups with reference to the threshold values. The mobile terminal compares the received signal level (RXLEV) of each cell with multilevel threshold values and creates a signal level list by registering the cells of which RXLEV is greater than a threshold value with the same cell group.

Once the signal level list is created in this manner, the mobile terminal performs the cell acquisition process in descending order of threshold value defining each cell group. When the cell acquisition is successful with a higher threshold cell group, the mobile terminal stops the cell acquisition process and camps on one of the cells belonged to the threshold cell group. Otherwise, when the cell acquisition fails to the current threshold cell group, the mobile terminal performs the cell acquisition with the next higher threshold cell group. Accordingly, the cell acquisition process is performed several steps as many as the number of classified cell groups.

For this purpose, the mobile terminal according to an exemplary embodiment of the present invention includes a storage means for storing the multilevel threshold values, a means for classifying the cells into plural cell groups by multilevel threshold value, and means for performing the cell acquisition by cell group.

With the above processing means, the mobile terminal sets multilevel threshold values, sorts the cells into at least one cell group each having a power level range defined with the multilevel threshold value(s), and performs cell acquisition to the at least one cell group in unit of cell group in stepwise manner. For example, when cell acquisition fails to a cell group composed of cells of which RXLEV is greater than a first threshold value (Th₁), the mobile terminal attempts cell acquisition to the cell group composed of the cells of which RXLEV is equal to greater than the next threshold value (Th₂) and less than the first threshold value (TH₁). The cell acquisition can be attempted to the cell group having a power range greater than the n^{th} threshold value (Thₙ).

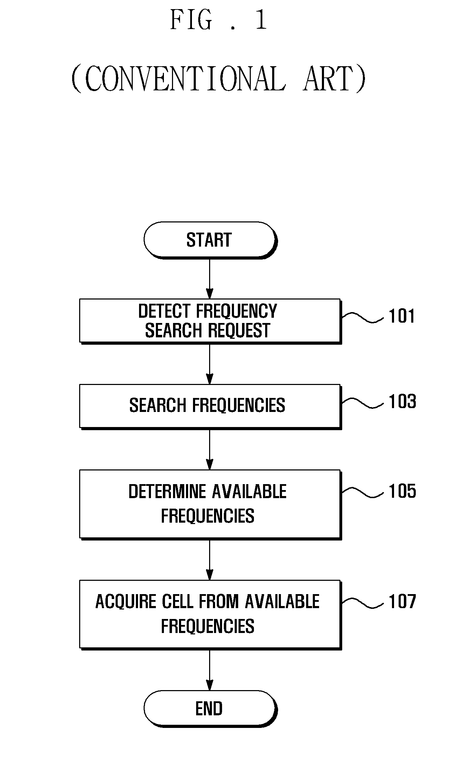

The cell acquisition process is described hereinafter in more detail with reference to drawings. A conventional frequency search and cell acquisition procedure is described first with reference to FIG. 1.

FIG. 1 is a flowchart illustrating a conventional frequency search and cell acquisition method.

Referring to FIG. 1, the mobile terminal first detects a frequency search request for cell selection (S101) and performs a frequency search process (S103). At this time, the mobile terminal creates a frequency list with the frequencies sorted in order of received signal level.

Next the mobile terminal determines available frequencies of which signal level is greater than a threshold value (S105) and performs cell acquisition to the available frequencies (S107).

As described with reference to FIG. 1, in the conventional cell acquisition method, the cell acquisition time and minimum intensity of electric field to attempt camp-on are determined by a single threshold value.

For this reason, a high threshold value increases the low limit of the electric field intensity for camp-on and reduces the number of searched frequencies for attempting cell acquisition, resulting in reduction of cell acquisition possibility and cell acquisition time. Otherwise, if the threshold value is set low, the low limit of the electric field intensity for camp-on decreases. This increases the cell acquisition possibility but also increases the cell acquisition time too.

That is, there is a trade-off relationship between the cell acquisition possibility and cell acquisition time in the conventional cell acquisition procedure.

In an exemplary embodiment of the present invention, multilevel low limits of the electric field intensities are used such that the average cell acquisition time decreases by performing the cell acquisition in stepwise manner and the average cell acquisition possibility increases by lowering the minimum electricity intensity level in stepwise manner. The cell acquisition method according to an exemplary embodiment is described in more detail hereinafter with reference to drawings.

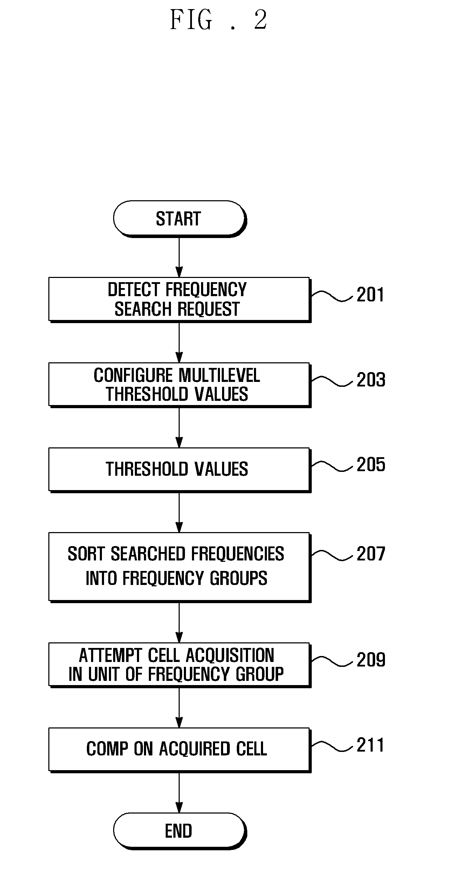

FIG. 2 is a flowchart illustrating a cell acquisition method according to an exemplary embodiment of the present invention.

Referring to FIG. 2, the mobile terminal detects a cell search request for cell selection (S201). Once a cell search request is detected, the mobile terminal configures multilevel threshold values (S203). The multilevel threshold values can be preset in the manufacturing phase of the mobile terminal or can be reset by the user or according to the system request. The multilevel threshold values are described later with reference to table 1.

Next, the mobile terminal searches all frequencies for available frequencies (S205). At this time, the mobile terminal can create a list of frequencies sorted by power level in association with multilevel threshold values. The mobile terminal sorts the searched frequencies into frequency groups corresponding to power level ranges defined by the multilevel threshold values (S207). Each frequency group is a set of frequencies of which power levels are in the range of the frequency group. How to classify the frequencies into frequency groups is described later with reference to table 1.

After creating the frequency list composed of the cell groups, the mobile terminal performs cell acquisition in unit of frequency group in descending order of power level ranges of the frequency groups (S209). The mobile terminal first performs cell acquisition to the highest level frequency group and, if the cell acquisition has failed, the next highest level frequency group until succeeding the cell acquisition. If the mobile terminal succeeds cell acquisition to a specific frequency group, it stops the cell acquisition process to the rest frequency groups and attempts to camp on the acquired cell.

That is, the mobile terminal camps on a specific cell of the frequency group to which the cell acquisition succeeds (S211).

Although the frequency search step (S205) follows the multilevel threshold setting step (S203) in FIG. 2, the present invention is not limited thereto. For example, the frequency search step (S205) can precede the multilevel threshold setting step (S203).

The searched frequencies are classified into frequency groups with reference to multilevel power levels as shown in table 1.

**Table 1**

| Threshold | Value | Note |
|---|---|---|
| Th₁ (the first group) | Cell A | *RXLEV* ≥ *Th*₁ |
| | Cell B | |
| | Cell C | |
| | Cell D | |
| | . . . | |
| Th₂ (the second group) | Cell E | *Th*₂ ≤ *RXLEV* < *Th*₁ |
| | Cell F | |
| | Cell G | |
| | Cell H | |
| | . . . | |
| . . . | . . . | . . . |
| Thₙ (the n^{th} group) | Cell O | *Thₙ* ≤ *RXLEV* < *Th*_{*n*-1} |
| | Cell P | |
| | Cell Q | |
| | Cell R | |
| | . . . | |

As shown in table 1, the mobile terminal has multiple threshold values Th₁ to Thₙ for determining the frequency groups. The threshold values indicate reference power levels selected in stepwise manner. The mobile terminal is provided with at least one of buffer, an internal memory, and a subscriber identity module for storing the multilevel threshold values.

In an exemplary embodiment, the searched frequencies are sorted with reference to the threshold values and belonged to the corresponding frequency groups. Each searched frequency can be listed with cell information. That is, searched frequencies of which power levels are in the same power level range between defined by threshold values are belonged to the same frequency group.

For example, frequencies (cells A to D) of which power levels (RXLEVs) are equal to or greater than the first threshold value (Th₁) are belonged to the first group, the frequencies (cells E to H) of which power levels are equal to or greater than the second threshold value (Th₂) and less than the first threshold value (Th₁) are belonged to the second group, and frequencies (cells O to R) of which power levels are equal to or greater than n^{th} threshold value and less than the n-1^{th} threshold value are belong to the n^{th} group.

The cell information can include at least one of a channel number, a Base Station Identifier (BSID), a Mobile Country Code (MCC), a Mobile Network Code (MNC), and a Broadcast Control Channel (BCCH) Allocation list. In case of PLMN, the channel number can be the Absolute Radio Frequency Channel Number (ARFCN). The ARFCN is a channel number allocated by the PLMN for identifying a radio frequency channel, i.e. a cell within the PLMN.

In table 1, each of the first to n^{th} frequency groups (i.e., cell groups) includes more than four cells as an exemplary case. However the number of frequencies of each frequency group can be changed according the frequency search result.

After the frequency search process has completed, the mobile terminal compares the power levels of the searched frequencies to the multilevel frequency values and sorts the searched frequencies into the power level ranges representing the frequency groups. Accordingly, a specific frequency group may have no searched frequency. In this case, the frequency group having no searched frequency can be removed. That is, the mobile terminal can skip the cell acquisition process to the frequency group having no searched frequency.

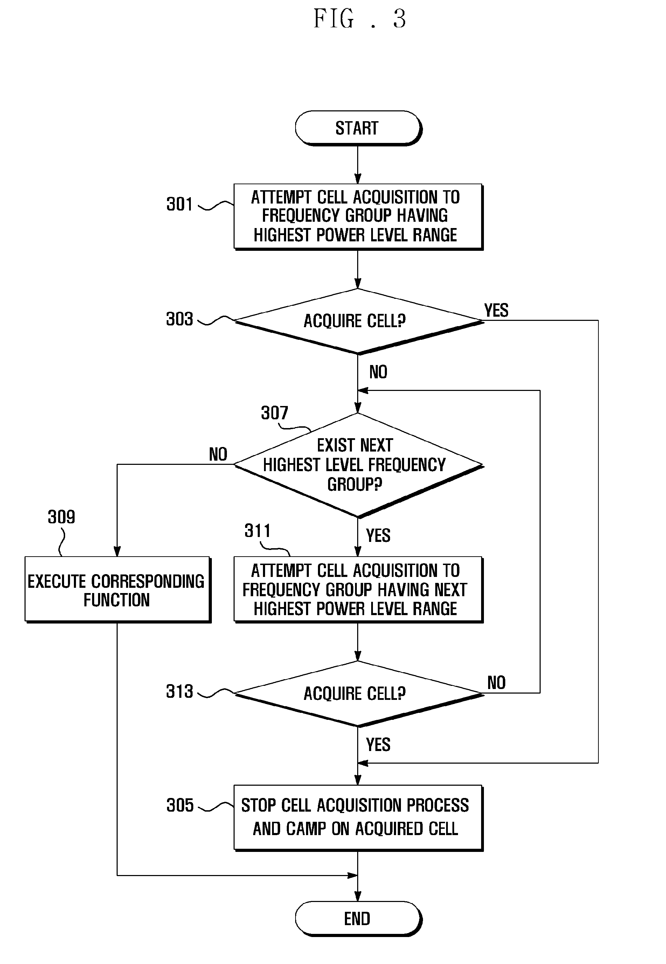

FIG. 3 is a flowchart illustrating the stepwise cell acquisition process (S209) of FIG. 1 in more detail.

Referring to FIGs. 2 and 3, after grouping the searched frequencies at step S207, the mobile terminal attempts cell acquisition to the highest level frequency group using the cell information of respective frequencies belonged to the frequency group (S301). Here, the highest level frequency group is a frequency group corresponding to the highest power level range.

Referring to the exemplary case of table 1, the highest level frequency group is the first cell group having the power level range greater than the first threshold value (Th₁).

Next, the mobile terminal determines whether the cell acquisition to the highest level frequency group succeeds (S303). That is, the mobile terminal searches the frequencies of the highest level frequency group for a suitable cell to camp on. If a suitable cell is acquired, the mobile terminal stops the cell acquisition process to the highest level frequency group and camps on the acquired suitable cell (S305).

Otherwise, if the cell acquisition fails to the highest level frequency group, the mobile terminal determines whether a next highest level frequency group exists (S307). If no next highest level frequency group exists, the mobile terminal performs a corresponding operation (S309). For example, when the cell acquisition to the highest level frequency group has failed and there is no next highest level frequency group, the mobile terminal may perform the frequency search process of FIG. 2 again. Also, the mobile terminal may wait for a predetermined time to retry the frequency search process.

Otherwise, if a next highest level frequency group exists, the mobile terminal attempts cell acquisition to the next highest level frequency group with reference to the cell information of the respective frequencies belonged to the frequency group (S311). Here, the next highest level frequency group is the frequency group having the power level range defined between the highest threshold value and the next highest threshold value. Referring to the exemplary case of table 1, the next highest level frequency group is the second cell group having the power level range defined by the power level equal to or greater than the second threshold value (Th₂) and less than the first threshold value (Th₁). The cell acquisition process is repeated to the final frequency group (n^{th} group) until the cell acquisition succeeds.

Next, the mobile terminal determines whether the cell acquisition to the next highest level frequency group succeeds (S313). That is, the mobile terminal searches the frequencies of the next highest level frequency group for a suitable cell to camp on. If a suitable cell is acquired, the mobile terminal stops the cell acquisition process to the rest frequencies of the next highest level frequency group and camps on the acquired suitable cell (S305).

Otherwise, if the cell acquisition fails to the next highest level frequency group, the process goes to step S307.

Until now, how to set the multilevel threshold values and a cell acquisition method using the multilevel threshold values are described. Hereinafter, a mobile terminal for implementing the above described cell acquisition method is described. Although the structures and functions of the mobile terminal are described according to an exemplary embodiment hereinafter, it should be understood that many variations and modification are possible according to various embodiments.

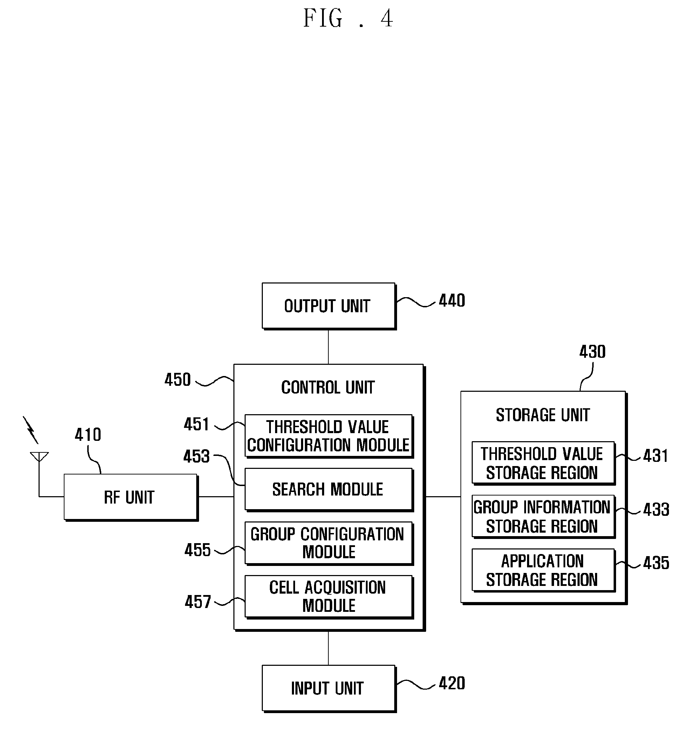

FIG. 4 is a block diagram illustrating a configuration of a mobile terminal according to an exemplary embodiment.

Referring to FIG. 4, the mobile terminal includes a Radio Frequency (RF) unit 410, an input unit 420, a storage unit 430, an output unit 440, and a control unit 450. The storage unit 430 includes a threshold value storage region 431, a group information storage region, and an application storage region 435. The control unit 450 includes a threshold value configuration module 451, a search module 453, a group configuration module 455, and a cell acquisition module 457.

The RF unit 410 is responsible for radio communication of the mobile terminal. The RF module 410 establishes a communication channel with a base station of a network for data and voice communications. The RF unit 410 receives the signals transmitted by a serving and neighbor cells and transfers the signal to the control unit 450 under the control of the control unit 450 such that the control unit 450 sorts the cells with reference to the received power levels of frequencies.

The input unit 420 is responsible for receiving various kinds of user input. The input unit 420 may include a key input unit for receiving the user's data input and an audio processing unit for processing audio input. The audio processing unit includes a microphone for receiving an audio signal (e.g., voice signal) and delivering the audio signal to the control unit 450. The key input unit generates alphanumeric data signals and command signals for configuring and executing functions of the mobile terminal and transfers these signals to the control unit 450.

The storage unit 430 stores application programs related to the operation of the mobile terminal, application data generated by the application programs, and user data created by the user. The storage unit 430 can include at least one buffer for storing the data generated while the application programs are running.

Particularly in an exemplary embodiment, the storage unit 430 stores the threshold values that are used for searching frequencies. The storage unit 430 can store the multiple threshold values. These are called multilevel threshold values. The multilevel threshold values can be stored in a threshold value storage region 431 of the storage unit 430. The multilevel threshold values can be stored within the threshold value storage region 431 together with the cell information obtained as a result of frequency search process in the form of a threshold value table as shown in table 1.

The storage unit 430 also can store the multilevel thresholds within the threshold value storage region 431 and store the cell information related to the searched cell as temporary cell group information separately. For this purpose, the storage unit 430 includes a group information storage region 433. The group information 433 can be stored temporarily or saved until the user deletes or updated with new group information.

In the frequency search process, the control unit 450 reads the multilevel threshold values from the threshold value storage region 431 and stores the cell information as the search result in association with the multilevel threshold values. The mobile terminal can keep or remove the group information stored in the group information region 433, while camping on a cell, in a predetermined manner.

The storage unit 430 also includes the application storage unit 435 for storing at least one application for executing the cell acquisition operation according to an exemplary embodiment.

In an exemplary embodiment, the application can be composed of at least one of frequency search application, multilevel threshold values-based frequency grouping application for grouping the searched frequencies with reference to the multilevel threshold values, and a cell acquisition application for performing cell acquisition process to individual frequency group in stepwise manner.

The output unit 440 can be composed of different kinds of output modules for outputting data of the mobile terminal. The output unit 440 includes a display unit for displaying various visual data and an audio processing unit for processing audio signal so as to output in the form of audible sound wave. The display unit can display the multilevel threshold values in the frequency search process or in response to a user request. The audio processing unit processes the audio signal from the control unit 450 and output the audio signal through a speaker in the form of an audible sound wave.

The control unit 450 controls overall operation of the mobile terminal and signaling among the internal function blocks of the mobile terminal. That is, the control unit 450 controls the signaling among the RF unit 410, input unit 420, storage unit 430, and output unit 440. The control unit 450 may incorporate at least one of a modem and a codec for processing communication signals.

Particularly in an exemplary embodiment, the control unit 450 controls the cell search procedure. The control unit 450 measures the power levels at the frequencies of the searched cells and sorts the searched cell in order of received power level. At this time, the control unit 450 sorts the cells into cell groups represented by the respective power level ranges defined by the multilevel threshold values and performs cell acquisition to the cell groups in unit of cell group in descending order of power level ranges.

That is, the control unit 450 performs the cell acquisition process in stepwise manner from the highest level cell group to the lowest level cell group corresponding to the power level ranges defined with the multilevel threshold values. When a cell is acquired in the highest cell group, the control unit 405 stops the cell acquisition process and attempts to comp on the acquired cell. Otherwise, when no cell is acquired in the highest level cell group, the control unit 450 performs cell acquisition to the next highest level cell group. The cell acquisition attempt is repeated to the lowest level cell group until a suitable cell is acquired.

The control unit 450 can include at least one of the threshold value configuration module 451, the search module 453, the group configuration module 455, and the cell acquisition module 457.

The threshold value configuration module 451 configures the multilevel threshold values for use in the frequency search process. The threshold value configuration module 451 generates multiple threshold values, i.e. the first to the nₜₕ multilevel threshold values (Th₁ to Thₙ). Here, n is a natural value equal to greater than 1. The multilevel threshold values can be updated periodically through communication with the system or according to a user configuration. The number of multilevel threshold values can be changed.

The search module 453 is in charge of searching frequencies for available cells. The search module 453 provides the group configuration module 455 with the search result.

The group configuration module 455 creates frequency groups (or cell groups) such that the searched frequencies of which power levels are in the power level range defined by the threshold value(s) are belonged to the corresponding frequency group. The group configuration module 455 can sort the searched frequencies into the frequency group by comparing the power levels of the individual searched frequencies to the respective multilevel threshold values.

The cell acquisition module 457 performs a cell acquisition process to the frequency groups in stepwise manner. The cell acquisition module 457 attempts cell acquisition in unit of cell group from the highest level cell group to the lowest level cell group corresponding to the respective power level ranges defined by the multilevel threshold values. That is, the cell acquisition module 457 performs cell acquisition to the frequencies of the highest level cell group and, if failed, the frequencies of the next highest level cell group. If a cell is acquired in a specific cell group, the cell acquisition module 457 stops the cell acquisition process to the rest cell groups and camps on the acquired cell.

Although not depicted in FIG. 4 for a simple explanation purpose, the mobile terminal can include more internal function blocks.

In an exemplary embodiment, the mobile terminal may further include at least one of a camera module, an electric transaction module, a subscriber identity module, a local area communication module, a digital broadcast receiver module, and their equivalent modules.

In an exemplary embodiment, at least one of the internal function blocks constituting the mobile terminal can be removed or replaced by its equivalent module. For example, in case of dual mode mobile terminal, the single RF unit 410 can be replaced with two RF units for providing two different radio communication interfaces.

In case that the mobile terminal operates with a Subscriber Identity Module (SIM) and/or Universal SIM (USIM), the multilevel threshold values and group information can be stored within the SIM or USIM. Since the storage with the SIM/USI is out of the scope of the present invention, detailed description is omitted.

As described above, the cell acquisition method and mobile terminal of the present invention is advantageous to reduce the cell selection/reselection delay and thus power consumption. Particularly, the cell acquisition method and mobile terminal of the present invention allows performing cell acquisition process in stepwise manner using multilevel threshold values of power level, resulting in improvement of cell acquisition efficiency.

Also, the cell acquisition method and mobile terminal of the present invention enables the mobile terminal to attempt cell acquisition to the frequencies having low intensity power levels, resulting in increase of the cell acquisition possibility. Furthermore, the cell acquisition method and mobile terminal of the present invention enables the mobile terminal to stop the current cell acquisition process, when a cell is acquired in one of multiple frequency groups, to the rest frequency groups and camps on the acquired cell, thereby reducing the cell acquisition time and power consumption.

Although exemplary embodiments of the present invention are described in detail hereinabove, it should be clearly understood that many variations and/or modifications of the basic inventive concepts herein taught which may appear to those skilled in the present art will still fall within the spirit and scope of the present invention, as defined in the appended claims.

## Claims

1. A cell acquisition method for a communication system, comprising:
classifying frequencies into at least one frequency group each having a power level range defined by multilevel threshold values; and
acquiring a cell by performing a cell acquisition process to the at least one frequency group in stepwise manner.

2. The cell acquisition method of claim 1, wherein classifying frequencies into at least one frequency group comprises:
searching the frequencies with reference to the multilevel threshold values in response to a frequency search request;
measuring signal power levels of the searched frequencies; and
sorting the searched frequencies into the at least one frequency group based on the signal power levels.

3. The cell acquisition method of claim 2, wherein acquiring a cell comprises attempting the cell acquisition process in descending order of power level ranges of the at least one frequency group.

4. The cell acquisition method of claim 3, wherein acquiring a cell comprises:
stopping, when a cell is acquired in one of the at least one frequency group, the cell acquisition process to the rest frequency groups; and
camping on the acquired cell.

5. The cell acquisition method of claim 4, wherein acquiring a cell comprises attempting, when a cell is not acquired in the current frequency group, the cell acquisition process to a next cell group.

6. The cell acquisition method of claim 1, wherein acquiring a cell comprises:
attempting the cell acquisition process in descending order of power level ranges of the at least one frequency group.
stopping, when a cell is acquired in one of the at least one frequency group, the cell acquisition process to the rest frequency groups;
camping on the acquired cell; and
attempting, when a cell is not acquired in the frequency group, the cell acquisition process to a next cell group.

7. The cell acquisition method of claim 6, wherein the at least one frequency group has power level ranges that are contiguously defined with the multilevel threshold values.

8. The cell acquisition method of claim 6, wherein acquiring a cell comprises determining, when a cell is not acquired in the frequency group, whether a next cell group exists.

9. A mobile terminal comprising:
a radio frequency unit which receives signals transmitted cells detected at current location;
a storage unit which stores multilevel threshold values defining power level ranges; and
a control unit which measures signal levels of the cells, sorts the cells into at least one cell group having the respective power level ranges, and acquires a cell by performing a cell acquisition process to the at least one cell group in stepwise manner.

10. The mobile terminal of claim 9, wherein the control unit reads the multilevel threshold values from the storage unit, creates the at least one cell group with the multilevel threshold values, and, when the mobile terminal camps on a cell, maintains or removes the cells in the at least one cell group.

11. The mobile terminal of claim 10, wherein the control unit attempts the cell acquisition process in descending order of power level ranges of the at least one frequency group.

12. The mobile terminal of claim 11, wherein the control unit stops, when a cell is acquired in one of the at least one frequency group, the cell acquisition process to the rest frequency groups and controls the mobile terminal camps on the acquired cell

13. The mobile terminal of claim 12, wherein the control unit comprises:
a threshold value configuration module which configures the power level ranges with the multilevel threshold values and arranges the power lever ranges in descending order;
a search module which searches frequencies of the cells;
a group configuration module which creates the at least one cell group by mapping to the respective power level ranges; and
a cell acquisition module which attempts the cell acquisition to the at least one cell group in descending order of the power level ranges.

14. The mobile terminal of claim 13, wherein the cell acquisition module attempts a cell acquisition process in unit of cell group from a cell group having a highest power level range to a cell group having a lowest power level group, camps, when a cell is acquired in one of the at least one frequency group, on the acquired cell, and stops the cell acquisition process to the rest frequency groups.

15. The mobile terminal of claim 5, wherein the storage unit comprises:
a threshold setting application for setting the multilevel threshold values;
a frequency search application for searching for frequencies in a cell selection process;
a grouping application for creating the at least cell group by mapping to the respective power level granges; and
a cell acquisition application for attempting the cell acquisition to the at least one cell group in descending order of power level ranges.
